# EUROPEAN PATENT SPECIFICATION

(11) **EP 4 032 923 B1**
(45) Date of publication and mention of the grant of the patent: **06.08.2025**
(21) Application number: 21152949.0
(22) Date of filing: 22.01.2021
(51) Int. Cl.: C08G 12/32, C08L 61/28

(54) **THERMOSETTING RESIN COMPOSITION FOR LAMINATE PANEL, METHOD FOR MANUFACTURING A PANEL WITH A THERMOSETTING RESIN COMPOSITION AND A LAMINATE PANEL COMPRISING A THERMOSETTING RESIN**
WÄRMEHÄRTENDE HARZZUSAMMENSETZUNG FÜR LAMINATPLATTE, VERFAHREN ZUR HERSTELLUNG EINER PLATTE MIT EINER WÄRMEHÄRTENDEN HARZZUSAMMENSETZUNG UND LAMINATPLATTE MIT EINEM WÄRMEHÄRTENDEN HARZ
COMPOSITION DE RÉSINE THERMODURCISSABLE POUR PANNEAU STRATIFIÉ, PROCÉDÉ DE FABRICATION D'UN PANNEAU AVEC UNE COMPOSITION DE RÉSINE THERMODURCISSABLE ET PANNEAU STRATIFIÉ COMPRENANT UNE RÉSINE THERMODURCISSABLE

(43) Date of publication of application: 27.07.2022
(73) Proprietor: Unilin, BV, 8710 Wielsbeke (BE)
(72) Inventor: CLEMENT, Benjamin, B-8790 Waregem (BE); BLIEK, Michiel, B-9000 Gent (BE)
(74) Representative: Unilin Technologies

(56) References cited:
- US-A- 3 859 243
- US-A- 4 076 662
- US-A- 6 001 925
- US-A1- 2002 146 545
- US-A1- 2019 256 702

## Description

Thermosetting resin composition for laminate panel, method for manufacturing a panel with a thermosetting resin composition and a laminate panel comprising a thermosetting resin.

The present invention relates to a thermosetting resin composition of the kind used for manufacturing panels having a decorative surface, or so-called decorative panels. The invention also relates to a method for manufacturing paper printable with inkjet for use as a decor paper in such panels and to the paper obtainable with such method. According to a variant the obtained decor paper may be used in a laminated assembly other than a panel, such as in so-called CPL (compact laminate) or HPL (high pressure laminate).

The present invention is defined in the claims. Disclosed embodiments not falling under the claims are for illustrative purposes only.

More particularly the invention is related to a method for manufacturing laminate panels, wherein said panels at least comprise a substrate material and a provided thereon top layer with a printed decor. The method could be used for manufacturing panels, the top layer of which is formed from thermosetting resin and one or more paper layers, wherein said paper layers comprise a decor paper having a printed pattern. The panels of the invention may relate to furniture panels, ceiling panels, flooring panels or similar, wherein these panels preferably comprise a wood based substrate, such as an MDF or HDF substrate (Medium or High Density Fiberboard) or a substrate material consisting of or essentially made of wood particleboard. Alternatively the panels can comprise a polymeric based substrate, preferably thermoplastic based substrate, such as PVC (Polyvinyl chloride), PP (Polypropylene), LVT (Luxury Vinyl Tile), SPC (Solid Polymer Composite) or WPC (Wood polymer composite) based substrate. The invention can further relate to mineral-based board of cement-based board, like for example, fiber cement based board or magnesium oxide based board.

Traditionally, the decor or pattern of such panels is printed on paper by means of offset or rotogravure printing. The obtained paper is taken up as a decorative paper in a so-called laminate panel. For manufacturing the panels the DPL process can be practiced.

According to the DPL process (Direct Pressure Laminate) the already printed paper or decorative paper is provided with melamine resin to form a decorative layer. Afterwards a stack is formed comprising at least a plate shaped substrate, said decorative layer and possibly a protective layer on top of said decorative layer, wherein said protective layer or overlay is based on resin and/or paper as well. Said stack is pressed and the press treatment results in a mutual connection or adherence of the decorative paper, the substrate and the protective layer, as well as in a hardening of the resin present in the stack. As a result of the pressing operation a decorative panel is obtained having a melamine surface, which can be highly wear resistant. At the bottom side of the plate shaped substrate a counter layer or balancing layer can be applied, or as an alternative a decorative layer might be attached to the bottom side as well, especially in the case of laminate panels for furniture. Such a counter layer or balancing layer or any other layer at the bottom side of the laminate panel restricts or prevents possible bending of the decorative panel, and is applied in the same press treatment, for example by the provision of a resin carrying paper layer as the lowermost layer of the stack, at the side of the stack opposite said decorative layer. For examples of a DPL process reference is made to EP 1 290 290, from which it is further known to provide a relief in said melamine surface during the same press treatment or pressing operation, namely by bringing said melamine surface in contact with a structured press element, for example a structured press plate. In case of HPL or CPL the decorative paper and optionally the wear layer is pressed on kraft paper.

US 3 859 243 A, US 4 076 662 A, US 2019/256702 A1, US 2002/146545 and US 6 001 925 A disclose impregnated paper for being used in laminate panels, that is impregnated with melamine resin comprising plasticizers.

The printing of paper by means of an analog printing process, such as by rotogravure or offset printing, at affordable prices inevitably leads to large minimal order quantities of a particular decorative paper or foil and restricts the attainable flexibility. A change of decor or pattern necessitates a standstill of the printing equipment of about 8 hours. This standstill time is needed for exchange of the printing rollers, the cleaning of the printing equipment and for adjusting the colors of the new decor or pattern to be printed.

Instead of analog printing techniques, digital printing techniques, especially inkjet printing techniques, are becoming increasingly popular for the creation of decors or patterns, be it on paper, on foil or directly on a plate-shaped substrate possibly with the intermediary of preparatory layers. Such digital techniques can enhance the flexibility in the printing of decors significantly. Reference is amongst others made to the EP 1 872 959, WO 2011/124503, EP 1 857 511, EP 2 431 190, EP 2 293 946, WO 2014/084787, WO 2015/140682 and the WO 2015/118451, where such techniques are disclosed.

EP 1 044 822, EP 1 749 676 and EP 2 274 485 disclose the use of an inkjet receiver coating to enhance the printing quality on a raw decor paper. Such inkjet receiver coating comprises pigments, especially silica, and a crosslinked polymer such as polyvinyl alcohol (PVA).

During private research, the inventor has also encountered problems with subsequent impregnation and lamination of printed paper. In particular, the inventor has encountered problems with water resistance of the décor paper during lamination under heat in presence of a polycondensation curing resin like melamine. Water resistance for laminate panel is defined by norm EN 438 and is measured according to two different tests:
- immersion of a specimen in boiling water for two hours, water resistance is determined by the increase of mass and thickness of the specimen and by changing of appearance thereof;
- exposure of the surface of a specimen to water vapor for a predetermined amount of time, water resistance is determined by the increase thickness of the specimen and by changing of appearance thereof.

The inventor has noticed that decor paper provided with inkjet receiver layer are more prone to fail this tests since boiling water and water vapor seem to affect the interaction between the inkjet receiver layer and the ink and the interphase between the décor paper and the overlay.

The present invention aims in the first place at an alternative method for manufacturing panels having a decorative surface or paper, for use in such panels, and seeks, in accordance with several of its preferred embodiments, to solve one or more of the problems arising in the state of the art.

Therefore the present invention, in accordance with its first independent aspect, relates to a thermosetting resin composition as defined by independent claim 1.

According to claim 1 the thermosetting resin composition comprises one or more modifiers wherein said the total content of said modifiers is below 10%, preferably below 7%, more preferably below 5%, even more preferably below 3% by weight of the resin. The inventor has found that by reducing the quantity of modifiers in the resin receipt water resistance of the panel is highly increased and the performance of the panel to both the vapor and boiling water test are improved.

Modifiers are substances that are added to the resin receipt in order to modify the plasticity of the thermosetting resin itself. Said modifiers can be grouped in external modifiers and internal modifiers. External modifiers are substances that don't react chemically with the resin, but that create physical irregularities in the microstructure of the resin thereby modifying its plasticity. Examples of external modifiers can be: poly-alcohols, polyglycols, glycerin, polyvinyl alcohol, phenoxyethanol, phenyl glycol, saccharides, polymers, dimethyl formamides. Examples of poly-alcohols can be: butanol, butanediol, propanol, sorbitol. Examples of poly glycols can be: tri-ethylene glycol, diethylene glycol, ethylene glycol. Examples of polymers can be: acrylic resins, polyesters, epoxy resins. Internal modifiers are substances that interact with the resin thereby inhibiting or limiting the crosslinking reaction of the resin itself thereby modifying its plasticity. Examples of internal modifiers can be: Caprolactam, guanamines, toluenesulphonamide, dicyandiamide, urea. Examples of guanamines can be benzo-guanamines or aceto-guanamines.

According to a preferred embodiment the thermosetting resin composition comprises one or more external modifiers in an amount below 5%, more preferably below 3%, even more preferably below 1% by weight of the resin. In a preferred embodiment, the resin can be free from external modifiers. For example, the resin can comprise only internal modifiers. Preferably, the resin can comprise at least internal modifiers in an amount below 7%, preferably below 5%, even more preferably below 3% by weight of the resin. Preferably, the resin can comprise at least internal modifiers in an amount above 2%, preferably 3%, for example above 5% by weight of the resin. In fact, inventors have found that relevant quantity of external modifiers can negatively affect the water resistance of the laminate panel, whereas the presence of internal modifiers have a more limited impact on the water resistance. Therefore, by increasing the quantity of internal modifiers while reducing the quantity of external modifiers it is therefore possible to improve the water resistance of the panel without affecting the flexibility of the thermosetting resin of the top layer.

Said thermosetting resin comprises at least, or be constituted by, melamine-based resin, such melamine-based resin is a resin that polycondensates while exposed to heat in a pressing operation. The polycondensation reaction creates water as a by-product. It is particularly with these kinds of thermosetting resins, namely those creating water as a by-product, that the present invention is of interest. In the preferred embodiment the thermosetting resin can comprise at least melamine formaldehyde resin, preferably with a formaldehyde to melamine ratio of 1.4 to 2.

According to the invention the thermosetting resin comprises a mixture of at least melamine formaldehyde resin and etherified melamine resin, in a ratio variable between 10:90 and 90:10, preferably between 30:70 and 70:30, for example 50:50. Other examples of such thermosetting resins leading to a similar polycondensation reaction include ureum-formaldehyde based resins and phenol-formaldehyde based resins. It is not excluded that other resins like water-based polyurethane dispersions or water-based acrylic dispersions are being used or mixed combination thereof. The inventor have noticed that etherified resin shows a better water resistance behavior than melamine formaldehyde resin although the second one shows a higher elasticity, thus a mixture of the two resins can provide for a top layer with sufficient water enhanced water resistance and elasticity.

It is also possible that the top layer comprises multiple layers for example a decorative layer comprising the décor paper and a wear layer above said top layer. Said wear layer can comprise said thermosetting resin, preferably an overlay paper impregnated with said thermosetting. According to an embodiment of the invention it is possible that the thermosetting resin impregnating the décor paper is different for the thermosetting resin impregnating the overlay paper. For example, one between the wear layer and the decorative layer can comprise a thermosetting resin comprising at least melamine formaldehyde resin, wherein the other can comprise a thermosetting resin comprising at least etherified melamine resin. In any case it is not excluded that the wear layer and the decorative layer comprise the same thermosetting resin.

The wear layer can comprise wear resistant particles, preferably aluminum dioxide.

Preferably the décor paper can be impregnated with a quantity of thermosetting resin equaling 40 to 250% dry weight of resin as compared to weight of the paper.

Preferably the décor paper can be provided with such an amount of thermosetting resin, that at least the paper core is satisfied with the resin. Such satisfaction can be reached when an amount of resin is provided that corresponds to at least 1.5 or at least 2 times the paper weight. It should be clear that the resin, which is provided on the paper layer, is not necessarily only available in the core of the paper, but may form surface layers on both flat sides of the paper. The inkjet receiver coating may then be present on the surface of the paper with the intermediary of such a surface layer of thermosetting resin. According to a special embodiment, the paper layer is firstly impregnated through or satisfied, and, afterwards, at least at the side thereof to be printed, resin is partially removed and possibly said inkjet receiver coating is provided.

Preferably, the obtained resin provided paper layer, i.e. after provision of the thermosetting resin, has a relative humidity lower than 15%, and still better of 10% by weight or lower.

Preferably the step of providing said paper layer with thermosetting resin involves applying a mixture of water and the resin on said paper layer. The application of said mixture might involve immersion of the paper layer in a bath of said mixture and/or spraying, jetting or otherwise coating said mixture on said paper. Preferably the resin is provided in a dosed manner, for example by using one or more squeezing rollers and/or doctor blades to set the amount of resin added to the paper layer.

Preferably, the method of the first aspect of the invention further comprises the step of applying a counter layer or balancing layer at the surface of the substrate opposite the printed paper layer. The case of a paper-based decor layer, the counter layer or balancing layer preferably comprises a paper layer and thermosetting resin, preferably the same resin as the top layer.

Preferably the mutual adherence of the substrate, the possible counter layer and the possible transparent or translucent layer is obtained in one and the same press treatment. According to the most preferred embodiment of the fourth aspect, these steps are taken up in a DPL process. According to alternative embodiments these steps are taken up in a CPL or in a HPL process.

The substrate can be a wood-based board or panel, preferably a such as to a particle board or an MDF or HDF board. Preferably, the method of the first aspect of the invention is a floor panel manufacturing method and comprises the step of providing said substrate with coupling elements for mechanical coupling to another floor panel. Said step of providing the substrate with coupling element is preferably performed after said pressing under heat step. It is noted that said substrate can also be in form of large board that, after said pressing under heat step, are cut into multiple laminate panel.

As is clear from the above, the method of the first aspect of the invention preferably comprises the step of hot pressing the printed and resin provided paper layer, at least to cure the resin of the obtained resin provided decor paper. Preferably the method of the invention forms part of a DPL process as above described, wherein the printed resin provided paper layer of the invention is taken up in the stack to be pressed as the decorative layer. It is of course not excluded that the method of the invention would form part of a CPL (Compact Laminate) or an HPL (High Pressure Laminate) process in which the decorative layer is hot pressed at least with a plurality of resin impregnated core paper layers, e.g. of so called Kraft paper, forming a substrate underneath the decorative layer, and wherein the obtained pressed and cured laminate layer, or laminate board is, in the case of an HPL, glued to a further substrate, such as to a particle board or an MDF or HDF board.

In the preferred embodiment the décor paper comprises a paper layer, an ink receiver coating on at least one side and a digitally printed patter, preferably an inkjet printed pattern. In the preferred embodiment, the paper comprises a dry amount of ink receiver coating that is below 7g/m², more preferably equal or lower than 5 g/m². Preferably, said paper is provided with 0.2 to 7 g/m², and preferably between 0.5 and 5 g/m², dry weight of said ink receiver coating. In fact, inventor has found that by limiting the amount of ink receiver coating on top of the paper layer it may be possible to improve the waterproof performances of the impregnated décor paper and of the laminate panel. The above mentioned amount of ink receiver coating further allow to obtain good printing performances while improving the waterproof performances.

Preferably, the décor paper is provided with thermosetting resin after being printed inkjet printing. For this reason, preferably the paper is only provided with an inkjet receiver coating at one side thereof, namely at the side provided to be printed upon. The other, opposite, side, is preferably untreated, such that this opposite side shows the original porosity of the paper layer from which it is started. The resin may then be provided substantially from the bottom side into the papers core. To allow sufficient impregnation of the paper having the inkjet receiving coating, the speed of the impregnation channel may be turned down, the resin may be made less viscous, the impregnation may be pressurized and/or the resin may be heated, e.g. to between 30 and 50°C.

The base paper of the décor paper preferably has a base paper weight, i.e. without ink receiving coating, higher than 20 grams per square meter, wherein, in the case of floor panels, of 50 to 100 grams per square meter, e.g. between 60 and 80 grams per square meter. Preferably, the paper layer comprising the ink receiver coating shows a resin penetration time lower than 3 sec.

Preferably, the paper layer is opaque and/or contains titanium oxide as a whitening agent. Alternatively, the paper layer may be a colored, pigmented and/or dyed base paper. The use of a colored and/or dyed base layer enables further the dry weight of deposited ink for attaining a particular pattern or color. In the case of paper, preferably the dye or pigment is added to the pulp before the paper sheet is formed. According to an alternative the ink receiver coating on said paper layer to be printed is colored or pigmented with colored pigments. In accordance with the general disclosure, however, the pigments contained in the ink receiver coating are preferably colorless or white.

Preferably the ink receiver coating comprises at least a pigment or a hygroscopic compound. Preferably, said paper is provided with 0.2 to 10 g/m², and preferably between 0.5 and 5 g/m², dry coating weight of a hygroscopic compound or pigment in said ink receiver coating. Preferably said pigment has a BET surface area between 10 and 1600 m²/g, and preferably between 15 and 500 m²/g.

According to the most preferred embodiment, for the pigment of said ink receiver coating at least or mainly silica particles are used. Preferably the silica particles are silane treated. Silane treatment of the pigments, in general, enhances dust release properties of the attained inkjet receiver coating and the thus treated paper or thermoplastic foil. The silane treatment may relate to a treatment with a coupling agent such as amino-organo-silanes, hydroxysilanes, dipodal silanes and/or other silanes. Preferably, the coupling agent is chosen such that the risk of yellowing upon aging of the attained inkjet receiver coating is low. Preferably, the coupling agent forms 0.1 to 5% of the total wet weight of the inkjet receiver coating.

According to variants, for the pigment of said ink receiver coating at least or mainly particles are used chosen from the list consisting of calcium carbonate, silica, alumina, aluminosilicates, ordered mesoporous materials, modified silica, organosilica, modified organosilica, organoalumina, modified alumina, aluminates, modified aluminates, organoaluminates, modified organoaluminates, zeolites, metal organic frameworks and porous polar polymers.

Preferably, said paper is provided with 0.2 to 7 g/m², and preferably between 0.5 and 5 g/m², dry coating weight of a binder in said ink receiver coating. According to the most preferred embodiment, for the binder in said ink receiver coating at least or mainly polyvinyl alcohols are used.

According to variants, the ink receiver coating includes, as a binder, a polymer selected from the group consisting of hydroxyethyl cellulose; hydroxypropyl cellulose; hydroxyethylmethyl cellulose; hydroxypropyl methyl cellulose; hydroxybutylmethyl cellulose; methyl cellulose; sodium carboxymethyl cellulose; sodium carboxymethylhydroxethyl cellulose; water soluble ethylhydroxyethyl cellulose; cellulose sulfate; vinylalcohol copolymers; polyvinyl acetate; polyvinyl acetal; polyvinyl pyrrolidone; polyacrylamide; acrylamide/acrylic acid copolymer; polystyrene, styrene copolymers; acrylic or methacrylic polymers; styrene/acrylic copolymers; ethylene-vinylacetate copolymer; vinyl-methyl ether/maleic acid copolymer; poly(2-acrylamido-2-methyl propane sulfonic acid); poly(diethylene triamine-co-adipic acid); polyvinyl pyridine; polyvinyl imidazole; polyethylene imine epichlorohydrin modified; polyethylene imine ethoxylated; ether bond-containing polymers such as polyethylene oxide (PEO), polypropylene oxide (PPO), polyethylene glycol (PEG) and polyvinyl ether (PVE); polyurethane; melamine resins; gelatin; carrageenan; dextran; gum arabic; casein; pectin; albumin; chitins; chitosans; starch; collagen derivatives; collodion and agar-agar. The most preferred variants for the binder are polyvinyl acetates, ethylvinylacetates, block copolymers based on polyvinyl acetate, block copolymers based on polyvinylalcohol, acrylates, latexes, polyvinyl derivaties, VCVAC derivatives, polyurethanes based on polyols and isocyanates, polyurethanes based on polycarbamates and polyaldehydes, e.g. both as a watery dispersion/emulsion or a watery or solvent solution.

As stated above preferred binders for the ink receiving layer include polyvinyl alcohol (PVA), but according to variants a vinylalcohol copolymer or modified polyvinyl alcohol may be applied. The modified polyvinyl alcohol may be a cationic type polyvinyl alcohol, such as the cationic polyvinyl alcohol grades from Kuraray, such as POVAL C506, POVAL C118 from Nippon Goshei.

Preferably, said ink receiver coating has, globally seen, a pigment to binder ratio between 0/1 or 0.01/1 and 25/1, preferably between 0/1 or 0.01/1 and 20/1. It is not excluded that the ink receiver coating is non uniform and shows layerwise or areawise differences in composition, in which case the above values are average values for the totality of the inkjet receiver coating.

The ink receiver coating can further comprise a crosslinking agent. Preferably, the ink receiver coating can preferably comprise a content of crosslinking agent below 5 % based on dry weight of the composition. The crosslinking agent can be preferably selected from the group comprising: aldehydes, polyaldehydes, dialdehydes, alcohols, boronic acid, borax, polyalcohols, carbamates, polycarbamates, carbonic acids, glyoxal based agent, zirconium-based agents, titanates and polycarbonic acids.

The ink receiver coating can further comprise a dispersant. A dispersant is an oligomer or polymer which stabilize the liquid dispersions of pigment contained in the ink against flocculation. The dispersant can comprise polycarboxylates, polyphosphates, a polyionic polymer, preferably polyDADMAC (Polydiallyldimethylammonium chloride) polyamine or alumina salts.

Preferably, the ink receiver coating is provided with less than 10 %, more preferably less than 5% based on dry coating weight of dispersant, for example between 5 and 0%. Preferably, said ink receiver coating has, globally seen, a pigment to dispersant ratio between 10/1 and 100/1, more preferably it has a pigment to dispersant and binder ratio between 10/1 and 100/1.

The ink receiver coating can also comprise a flocculant, preferably a metal salt, preferably a cationic metal salt. Preferably said metal salt is chosen from the list consisting of CaCl₂, MgCl₂, CaBr₂, MgBr₂, CMA (Calcium Magnesium Acetate), NH₄Cl, Calcium Acetate, ZrCl₄, calcium nitrate and Magnesium Acetate. The positive ion of the dissolved metal salt will tend to neutralize the electrosteric stabilization function of the pigment contained in the ink thereby improving its absorption. The most preferred cationic metal salts are CaCl₂, MgCl₂, CMA, Calcium Acetate, calcium nitrate and Magnesium Acetate, as the inventors have obtained the best results with these ink reactive compounds. Said flocculant can also be chosen from the list consisting of sodiumaluminate, a double sulphate salt such as alum, polyaluminumchloride, polyacrylate, dicyandiamide (e.g. Floquat DI5 from SNF) and polyacrylamide. The flocculating agent pulls the ink pigments out of the ink dispersion. Thereby the pigments are prevented from penetration to far down into the ink receiver coating. Mainly the vehicle of the ink, e.g. the water in the case of waterbased inks, is absorbed deeper down into the ink receiver coating.

Preferably, ink receiver coating is provided with 20 to 60 %, based on dry coating weight of flocculating agent, in particular of metal salt.

The ink receiver coating may also comprise one or more of the following agents:
- Agents altering, more particularly lowering, the pH of said ink receiver coating. Preferably the pH of the ink receiver coating composition is lowered to pH 5 or lower, by selecting the amount and type of said substance, which selection is within the ambit of the skilled man. Preferably said substance is chosen from the list consisting of formic acid, tartaric acid, acetic acid, hydrochloric acid, citric acid, phosphoric acid, sulfuric acid, AlCl₃ and boronic acid. An adjusted, more particularly lowered pH, preferably to pH 5 or less, increases the chemical affinity of the inkjet receiver coating with the ink and will interfere with the electrosteric stabilization function on the pigment, such that the dispersion of the pigments in the ink will become destabilized quickly.
- Particle surface modifying agents or coupling agents: between 0.05 and 5 g/m², preferably between 0.2 and 2 g/m², e.g. chosen from the non-limiting list consisting of amino silanes, ureido silanes, aldehyde silanes, tetraethylorthosilicate, siliazanes, organically modified silanes, organically modified siliazanes, chlorosilanes, organically modified chlorosilanes, bissilanes, organobissilanes, silsesquioxanes, polysilsesquioxnes, silane oligomers, organically modified silane oligomers, bissilane oligomers, organically modified bissilane oligomers, oligomeric silsesquioxanes, and oligomeric polysilsesquioxanes.
- Additives: wetting agent between 0.005 and 1 g/m², preferably between 0.05 and 0.5 g/m²; and/or defoaming agent between 0.005 and 1 g/m², preferably between 0.05 and 0.5 g/m²; and/or fungicide between 0.005 and 1 g/m², preferably between 0.05 and 0.5 g/m².

According to the most preferred embodiment said inkjet receiver coating is present on the décor paper in the form of a unique layer having the inkjet receiving coating composition. Anyway, it is not excluded that said inkjet receiver coating is in the form of two layers, wherein respectively a first layer with a first composition and a second layer with a second composition wherein said first and second composition may be either the same or different compositions.

Preferably, in the method of the invention, the décor paper can be printed using water-based inks or UV curing inks or hydro-UV inks, in particular comprising pigmented inks. In the first place the décor paper used in the method of the first aspect are printed upon using inkjet printing equipment. However, the inventors have also found waterproof performances using analog printed paper.

Preferably the printed pattern applied to the paper layer of the invention, covers the majority, and preferably 50 percent or more of the surface of said paper layer. Preferably, the printed pattern on the décor paper comprises an amount of pigment below 9g/m². The inventor has found that limiting the weight of deposited provides for an increased waterproof performance of the impregnated décor paper because of the limited presence on the paper of hygroscopic substances in the ink and in particular in the pigment of the ink

It is to be noted that the fact that the top layer can comprise the thermosetting resin with a composition according to the first independent aspect can form a solution that is independent from the fact that said thermosetting resin is impregnating the décor paper or not. Thereto, with the same aim of the first independent aspect, the invention according to its second unclaimed aspect relates to a method for manufacturing laminate panels, wherein said panels at least comprise a substrate material and a provided thereon top layer, wherein the top layer comprises at least a thermosetting resin, that comprises the steps of:
- providing the substrate material,
- providing the thermosetting resin on top of said substrate material,
- pressing under heat thermosetting material on top of said substrate material;
with as a characteristic that said thermosetting resin comprises a composition that shows one or more of the features illustrated in the above mentioned three measures. It is to be noted that the method of the second independent aspect can comprise one or more of the features described above in relation to the first independent aspect.

Preferably, the method of said second aspect can comprise the steps of:
- providing at least one between a décor paper and an overlay paper; and
- impregnating at least one between said décor paper and said overlay paper with the thermosetting resin.

In the preferred embodiment both said décor paper and said overlay paper are impregnated with the same thermosetting resin. In a different embodiment the décor paper and the overlay paper can be impregnated respectively with a first and a second thermosetting resin wherein only one between the first and the second thermosetting resin has a composition according to the second or first independent aspect, or wherein the first and second thermosetting resin are both according to the second or first independent aspect but comprise feature according to different measure. Just for sake of example the first thermosetting resin can have a composition according to the first measure and the second thermosetting resin can have a composition according to the third measure.

It is also to be noted that the invention, according to its third unclaimed aspect relates to a laminate panel comprising a substrate material and a top layer comprising a thermosetting resin, wherein the thermosetting resin comprises a composition that shows one or more of the features illustrated in the above mentioned three measures. It is to be noted that the panel of the third independent aspect can comprise one or more of the features described above in relation to the first and second independent aspects.

It is clear that the present invention also relates a thermosetting resin composition for laminate panel having the features described in relation to the first independent aspect. Thereto, according its fourth unclaimed aspect the invention relates to a thermosetting resin composition comprising a melamine based, with the characteristic that said composition shows one or more of the features illustrated in the above mentioned three measures. The composition of the fourth independent aspect can comprise one or more of the features described in relation to the first independent aspect.

It is to be noted that the fact the décor paper, or the printable paper for forming the décor paper, comprises an inkjet receiver coating in an amount below 7 g/sqm dry weight, more preferably equal or below 5g/sqm dry weight forms an inventive concept independently from the fact it is used in a panel or in a method according to the first, second and third independent aspect as well as from the fact that it is impregnated with a thermosetting resin having a composition according to the fourth independent aspect. Thereto with the same aim of maximizing the waterproof performance of the décor paper and of the laminate panel comprising the décor paper, the invention, according to its fifth unclaimed aspect relates to a printable paper for décor paper for laminate panel comprising a paper layer and a an ink receiver coating on at least one of the surface of the paper layer, with the characteristic that the ink receiver coating is present in an amount below 7 g/sqm dry weight, more preferably equal or below 5g/sqm dry weight. Similarly, the invention relates to a décor paper for laminate panel comprising a paper layer wherein said paper layer is provided on one of its surfaces with an ink receiver coating and a printed pattern, with the characteristic that the ink receiver coating is present in an amount below 7 g/sqm dry weight. The printable paper and/or the décor paper of the fifth independent aspect can comprise one or more of the features described in relation to the first independent aspect.

With the same aim of the fifth unclaimed aspect the invention, according to its sixth unclaimed aspect relates to a method for manufacturing a laminate panel that comprises the steps of
- providing the substrate material,
- providing a décor paper according to the fifth independent aspect on top of the substrate material;
- impregnating said décor paper with a thermosetting resin,
- pressing under heat said décor paper on top of said substrate material.

The method of the sixth independent aspect can comprise one or more of the features described in relation to the first and second independent aspect. Similarly, the invention relates to a laminate panel comprising the décor paper of the fifth independent. Said panel can comprise one or more of the features described in relation to the first of third independent aspect.

Preferably for printing the paper layer or foil of the invention, a digital inkjet printer is applied that allows to jet ink droplets with a volume of less than 50 picoliters. The inventors have found that working with droplets having a volume of 15 picoliters or less, for example of 10 picoliters, brings considerable advantages regarding the limitation of dry weight of deposited inks. Preferably a digital inkjet printer is applied that allows to work with ink droplets of several volumes in one and the same print, or with so-called halftone or gray scale. The possibility of half tone or gray scale printing enables further limitation of the dry weight of deposited ink while maintaining an excellent print definition. Preferably a digital inkjet printer is applied that allows to attain a definition of at least 200 dpi, or even better at least 300 dpi (dots per inch). Preferably said digital inkjet printer is of the single pass type, wherein the paper layer or foil is provided with said printed pattern in a single continuous relative movement of the paper layer with respect to the printer or print heads. It is not excluded that other digital inkjet printers are used to put the invention into practice, such as so-called multi-pass or plotter type printers. It is clear that, according to the most preferred embodiment of the present invention, the paper layer, while printing, is still flexible and that the paper layer is only attached or put on the substrate after printing. According to a variant the paper layer is already attached or loosely laid on the plate shaped substrate while printing. The possible attachment with the substrate can be reached by means of urea based, phenol based, melamine based, polyurethane based glues and similar adhesives. Such attachment can be attained by means of a pressing treatment, whether or not a heated press treatment.

It is also to be noted that, with the same aim of the fifth independent aspect, the invention, according to its seventh unclaimed aspect relates to a method for manufacturing a printable paper or a décor paper with an amount of inkjet receiver coating below 7 g/sqm dry weight, more preferably equal or below 5g/sqm dry weight. Therefore, the invention relates to a method for manufacturing a printable paper comprising the steps of providing a paper layer and providing at least a surface of said paper layer with an amount of inkjet receiver coating below 7 g/sqm dry weight, more preferably equal or below 5g/sqm dry weight. The invention further relates to a method for manufacturing a décor paper comprising the steps of providing a paper layer; providing at least a surface of said paper layer with an amount of inkjet receiver coating below 7 g/sqm dry weight, more preferably equal or below 5g/sqm dry weight, printing a pattern on top of said ink receiver coating, preferably by inkjet printing. Wherein said printing said can comprise one or more of the features described in relation to the first independent aspect. It is to be noted that the ink receiver coating can be provided in line with the printer for printing said pattern. Alternatively, the paper layer can be provided with already the ink receiver coating on top.

Preferably, said ink receiver coating is a liquid substance which is deposited on said paper layer, and which is preferably forcibly dried e.g. in a hot air oven or by means of infrared or near infrared light or by means of microwave drying. Preferably the liquid substance is a water-based suspension of at least said binder, and possibly said pigments. Preferably the liquid substance composition has a dry matter content of 4 to 65 percent by weight of the liquid substance.

The deposition of said liquid substance of the ink receiver coating can be obtained in any way, possibly by means of printing, e.g. inkjet printing, but preferably by means of coating techniques, such as roller coating, e.g. by means of one or more gravure rollers, spraying, metering rollers, bead coating, scattering, slot die coating. With the latter techniques, preferably a coating is obtained that covers at least 80% of the surface of the paper layer or foil. Inline measurement systems may be desirable to steer and control the weight of the inkjet receiver coating. Such technique brings down the risk of obtaining uncoated areas of the paper, which could lead to local flaws in the printed pattern. A preferred equipment for application of the liquid substance is a rotogravure or anilox coating device.

The deposition of the liquid substance for the ink receiving coating may be performed in a rotogravure coating line or, alternatively, on the printing equipment, immediately before the printing operation. This last case solves any possible issues with limited shelf life of the inkjet receiver coating. Preferably the deposition of the liquid substance is performed while the paper or foil is still in an "endless" shape, namely taken from the roll without cutting. Such techniques allow for a more uniform application of the inkjet receiver coating. In the case the coating is wholly or partially done on the printing equipment, the printing equipment is preferably a roll-to-roll or a roll-to-sheet printer, comprising a coating device upstream of the print heads, for example a gravure coater and/or additional printing heads suitable for printing the liquid substance for the respective sublayer of the inkjet receiver coating. Such additional printing heads, for example an additional row of printing heads, may have nozzles with a larger diameter than those used for the actual printing of the pattern. A resolution of 1 to 100, or even 1 to 25 dots per inch may suffice for these nozzles.

It is also possible that the inkjet receiver coating may be applied directly in line with the paper machine with a sizepress or even more preferable a film press.

Said liquid substance for said ink receiver coating preferably shows a viscosity of 10 to 75 seconds Din cup 4 at 20°C. Such property allows for a straightforward application of the liquid substance to the surface of the paper layer or foil. In experiments, a solid content of about 12% and viscosity of about 20-seconds yielded a sufficiently uniform coating on a previously untreated paper layer, e.g. when applied by means of a roller coater.

With the intention of better showing the characteristics according to the invention, in the following, as an example without limitative character, an embodiment is described, with reference to the accompanying drawings, wherein:
figure 1 schematically shows - a printable paper layer that has been provided with an inkjet receiving coating in accordance with an embodiment of the invention;
figure 2 on a larger scale provide a view on the area F2 illustrated in figure 1;
figure 3 shows some steps in a method in accordance with the first aspect of the invention;
figure 4 shows in perspective a panel obtained by means of the method of figure 3;
figure 5 shows a view according to the line V-V indicated on figure 4;
figure 6 shows a piece of equipment for use amongst others in the first aspect of the invention;
figure 7 schematically shows a side view of a printer operated in single-pass mode on a central cylinder;
figure 8 shows some steps of an alternative method in accordance with the first aspect of the invention.

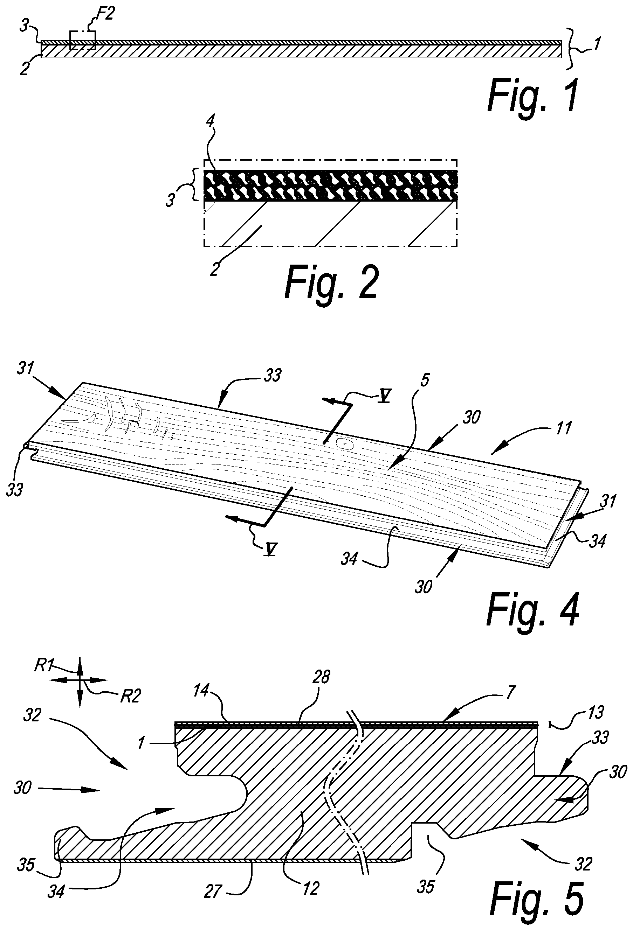

Figure 1 schematically illustrates a treated paper layer 1 that is printable with an inkjet printer. The printable paper layer 1 comprises a paper sheet 2 provided with an inkjet receiver coating 3. The paper sheet 2 is, in this case, a base printing paper having a weight of about 70 grams per square meter and with a mean air resistance as expressed by Gurley value of between 10 and 30 seconds.

The printable paper 1 comprises an amount of inkjet receiver coating 3 that is equal or lower than 5g/m² dry weight.

It is generally noted that the dimensions of the represented paper sheet 2 and the inkjet receiver coating 3 is, in the figures, drawn out of scale in order to better illustrate the invention.

Figures 2 shows that the inkjet receiver coating 3 comprises pigments 4. In the preferred embodiment the pigment substantially consists silica particles. The inkjet receiver coating 3, further comprises a binder preferably polyvinyl alcohol, a crosslinker, an ink reactive compound, more particularly a flocculating agent and/or a dispersant, such in accordance with the first aspect of the invention. It is clear however that the figures are also illustrative for many aspects of the present invention in the cases where a ink reactive compound, more specifically an ink destabilizing agent, other than a flocculating agent has been applied, such as for example a cationic metal salt.

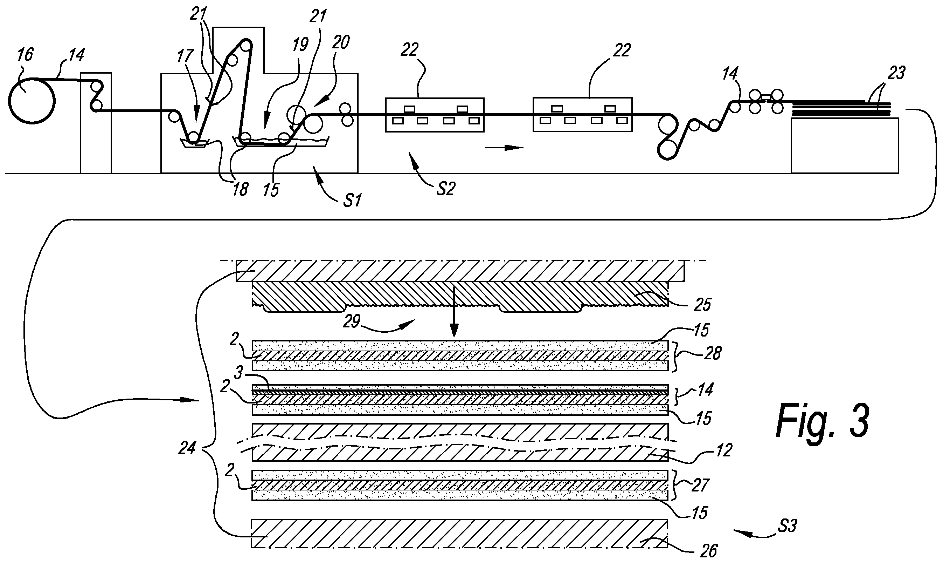

Figure 3 illustrates some steps of a method for manufacturing laminate panels 11 of the type shown in figures 4. The method forms an illustration of the first independent aspect of the invention as described in the introduction of the present patent application. The obtained decorative panels 11 at least comprise a substrate 12 and a top layer 13. The top layer 13 comprises a décor paper 14 formed by the printable paper 1 of figure 1 provided with a printed pattern or a digitally printed ink layer representing a wood pattern, as is the case here. The method of the example embodiment comprises at least the step S1 of providing said paper layer 1 having the inkjet receiving layer and the printed pattern with a thermosetting resin 15.

The thermosetting resin 15 has a composition showing one or more of the following features:
- it comprises one or more modifiers wherein said the total content of said modifiers is below below 10%, preferably below 7%, more preferably below 5%, even more preferably below 3% by weight of the resin; and/or
- it comprises one or more external modifiers below 1% by weight of the resin. The resin comprises at least internal modifiers in an amount between 2 and 5 % by weight of the resin; and/or
- the resin comprises at least etherified melamine resin. In particular the resin comprises a mixture of etherified melamine resin and melamine formaldehyde resin in a ratio between 30:70 and 70:30.

In the example the thermosetting resin composition comprises melamine formaldehyde. Said thermosetting resin composition further comprises a total amount of modifier of 4 %, wherein said modifiers comprise internal modifiers in an amount of 4% of the resin is free from external modifiers.

Hereto the décor paper 14 is taken from a roll 16 and transported to a first impregnation station 17 where said décor paper 14 is immersed in a bath 18 of said thermosetting resin 15, more particularly a mixture of water and thermosetting resin composition 15.

The décor paper 14 is then allowed to rest while in this case being transported upwards. The resting allows for the resin 15 to penetrate the paper core. The décor paper 14 then comes into a second impregnation station 19 where the paper layer 1 is, in this case, again immersed in a bath 18 of resin 15, more particularly a mixture of water and resin 15. A set of squeezing rollers 20 allows to dose the amount of resin 15 applied to the décor paper 14.

In the example several doctor blades 21 are available for partially removing resin at the surface of the resin provided décor paper 14.

In a second step S2 the resin provided décor paper 14 is dried and its residual humidity level is brought to below 10%. In the example hot air ovens 22 are used, but alternatively other heating equipment can be used, such as microwave or infrared drying equipment.

Figure 3 also illustrates that the continuous resin provided décor paper 14 is cut to sheets 23 and stacked. In an alternative embodiment the resin provided décor paper can be rolled up again on a second roll for stocking, in a second time the resin provided décor paper can be uncoiled from the second roll, cut to sheets 23 and stacked.

Figure 3 further illustrates that in a subsequent step S3 the obtained sheets 23 of the resin provided décor paper 14 is taken up in a stack to be pressed in a short daylight press 24 between upper and lower press plates 25-26. Said stack comprises from bottom to top a counter layer 27, a plate shaped substrate 12, the abovementioned resin provided décor paper 14 and a wear layer 28, wherein the counter layer 27 and the protective layer 28 both comprise a paper sheet 2, in case of the wear layer 28 called overlay paper, and resin 15. The stack is then pressed and the press treatment results in a mutual connection between the constituent layers 14-12-27-28, including the substrate 12, of the stack, as well as in a hardening or curing of the available resin 15. More particularly here a polycondensation reaction of the melamine-based resin 15 takes place, having water as a by-product.

The upper press plate 25 is a structured press plates that provides a relief in the melamine surface of the panel 1 during the same press treatment of the step S3, by bringing the structured surface 29 of the upper press plate 25 into contact with the melamine of the protective layer 28.

The finished pressed product made with the impregnated décor paper has been subjected to the waterproof tests according to norm EN 438 and passed both the test, boiling water test and vapor test, with a passing rate of 5 that means that there are no visible changes on the décor paper after the test.

Figure 4 illustrate that the obtained decorative panel or laminate panel 11 can have the shape of a rectangular and oblong laminate floor panel, with a pair of long sides 30 and a pair of short sides 31 and having an HDF or MDF substrate 12. In this case the panel 11 is at long at least the long sides 30 with coupling means 32 allowing to lock the respective sides 30 together with the sides of a similar panel both in a direction R1 perpendicular to the plane of the coupled panels, as in a direction R2 perpendicular to the coupled sides and in the plane of the coupled panels. As illustrated in figure 5 such coupling means or coupling parts can basically have the shape of a tongue 33 and a groove 34, provided with additional cooperating locking means 35 allowing for said locking in the direction R2.

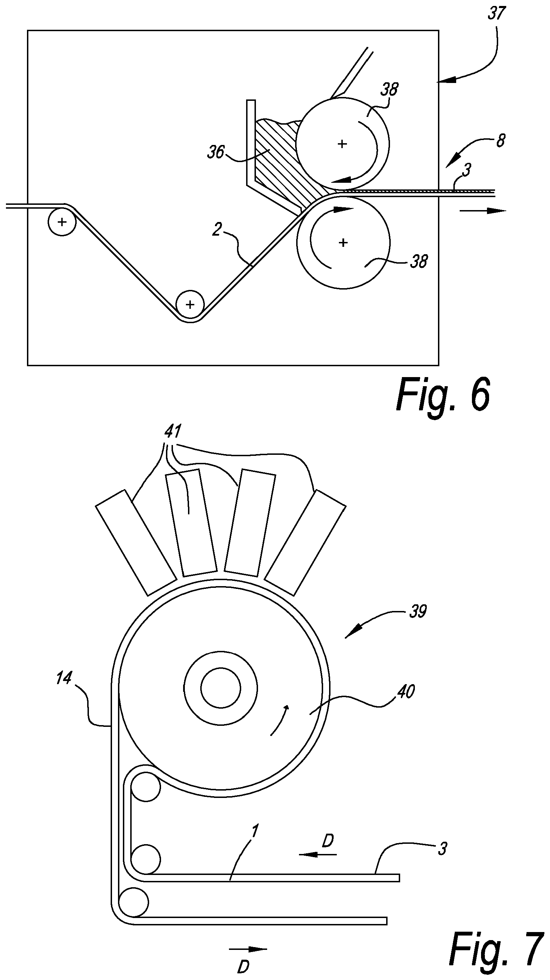

Figure 6 shows that, in accordance with a preferred embodiment, the ink receiver coating 3, may be obtained by coating a liquid substance 36 to the paper layer 2. A device 37 comprising reverse metering rollers 38 is applied. Such device 37 may initially apply an excess of the liquid substance 36, which is squeezed off to the desired weight by means of the rollers 38, which also may provide for a smooth coating surface. Preferably, the obtained half product 8 is then dried, e.g. by means of a hot air oven, to reach a residual humidity level of preferably below 10%, or of about 7%. Such is here not illustrated, but this may be executed in a fairly similar way. It is clear that as an alternative to the device 37, other application techniques may be used, such as application by one or more gravure rollers, possibly also running in reverse, or with a size press or a film press, preferably in line with the paper machine. Wherein with paper machine is meant the line for the production of the paper. For example, said device 37 can be a film press that applies the inkjet receiver coating between two drying steps on the machine paper.

Figure 7 illustrates that the printable paper 1 may be printed by means of an inkjet printer 39, which, in this example comprises a central cylinder 40 upon which the printable paper 1 is partially wound and several printing units 41, each comprising one or more print heads, disposed radially around the central cylinder 40 and over the area of the printable paper 1 to be printed. For example, the central cylinder 40 of the inkjet printer 39 comprises a radius between 800 and 950 mm, for example around 880 mm, and comprises a web angle above 270°, for example above 300°, preferably 320°. The printer 39, in this example, relates to a printer of the single pass type, wherein the provision of the printed pattern involves a relative motion of said inkjet printer 39, more particularly the printing unit 41, and said paper layer 1 during printing in a printing direction D. In this case, the printing unit 41 and the print heads are at standstill, while the paper layer 1 moves during ejection of inks onto the paper layer 1, more precisely onto the inkjet receiver coating 3 applied to the paper sheet. The paper layer 1 gets printed during a single continuous movement of the paper layer 1 relative the printer 39 or the rows 40 of print heads. The obtained décor paper 14 is subsequently wound up in roller 16.

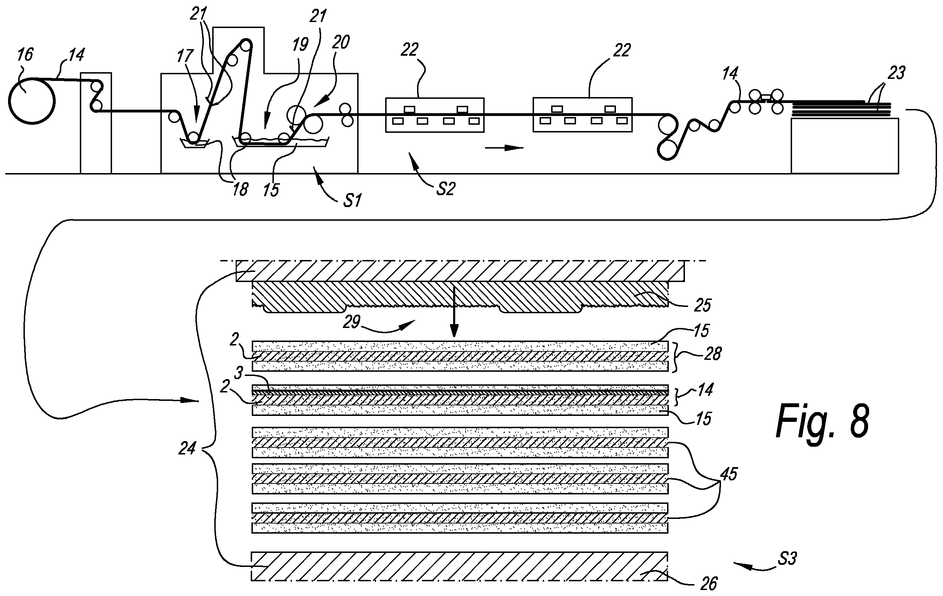

Figure 8 shows an alternative method that differs from the method illustrated in figure 3 only in that the panel is obtained in an HPL process and the substrate is formed by three superimposed kraft paper layer 45.

The present invention is in no way limited to the above described embodiments, but such methods, paper layers, panel may be realized according to several variants without leaving the scope of the invention as defined in the claims.

## Claims

1. A thermosetting resin composition comprising a melamine-based resin and one or more modifiers, **characterized in that** the total content of said modifiers is below 10%, preferably below 7%, more preferably below 5%, even more preferably below 3% by weight of the thermosetting resin, **characterized in that** the melamine-based resin comprises a mixture of at least melamine formaldehyde resin and etherified melamine resin and **in that** the ratio between the melamine formaldehyde resin and the etherified melamine resin is comprised between 10:90 and 90:10, preferably between 30:70 and 70:30 for example 50:50.

2. The thermosetting resin composition according to claim 1, **characterized in that** it comprises an amount of external modifiers below 5%, more preferably below 3%, even more preferably below 1% by weight of the thermosetting resin.

3. The thermosetting resin composition according to any of the preceding claims, **characterized in that** it is free from external modifiers.

4. The thermosetting resin composition according to any of the preceding claims, **characterized in that** the external modifiers are selected amongst the group comprising: poly-alcohols, polyglycols, glycerin, polyvinyl alcohol, phenoxyethanol, phenyl glycol, saccharides, polymers, dimethyl formamides.

5. The thermosetting resin composition according to any if the preceding claims, **characterized in that** it comprises internal modifiers in an amount below 7%, preferably below 5%, even more preferably below 3% by weight of the thermosetting resin.

6. The thermosetting resin composition according to any if the preceding claims, **characterized in that** it comprises internal modifiers in an amount above 2%, preferably 3%, for example above 5% by weight of the thermosetting resin.

7. The thermosetting resin composition according to any if the preceding claims, **characterized in that** it comprises internal modifiers selected from the group comprising: Caprolactam, guanamines, toluenesulphonamide, dicyandiamide, urea.

8. A panel comprising a substrate and a top layer wherein the top layer comprises a thermosetting resin, **characterized in that** said thermosetting resin comprises the composition according to any of the preceding claims.

9. The panel according to claim 8, wherein said top layer has a decorative layer, comprising a fist thermosetting resin, and wear layer, comprising a second thermosetting resin, wherein said first and second thermosetting resin are different each other.

10. The panel according to claim 9, wherein only one between the first and the second thermosetting resin is according to any of the claims from 1 to 7.

11. The panel according to claim 10, wherein said top layer has a decorative layer, comprising a fist thermosetting resin, and wear layer, comprising a second thermosetting resin, wherein said first and second thermosetting resin are different each other.

## Patentansprüche

1. Wärmehärtbare Harzzusammensetzung, die ein Harz auf Melaminbasis und ein oder mehrere Modifizierungsmittel umfasst, **dadurch gekennzeichnet, dass** der Gesamtgehalt der Modifizierungsmittel weniger als 10 %, vorzugsweise weniger als 7 %, besonders bevorzugt weniger als 5 %, noch bevorzugter weniger als 3 Gew.-% des wärmehärtbaren Harzes beträgt, **dadurch gekennzeichnet, dass** das Harz auf Melaminbasis eine Mischung aus mindestens einem Melaminformaldehydharz und einem veretherten Melaminharz umfasst, und dass das Verhältnis von dem Melaminformaldehydharz zu dem veretherten Melaminharz zwischen 10:90 und 90:10, vorzugsweise zwischen 30:70 und 70:30, beispielsweise 50:50, beträgt.

2. Wärmehärtbare Harzzusammensetzung nach Anspruch 1, **dadurch gekennzeichnet, dass** sie eine Menge an externen Modifizierungsmitteln umfasst, die weniger als 5 %, bevorzugt weniger als 30 %, noch bevorzugter weniger als 1 %, bezogen auf das Gewicht des Wärmehärtbaren Harzes, beträgt.

3. Wärmehärtbare Harzzusammensetzung nach einem der vorhergehenden Ansprüche, **dadurch gekennzeichnet, dass** sie frei von externen Modifizierungsmitteln ist.

4. Wärmhärtbare Harzzusammensetzung nach einem der vorhergehenden Ansprüche, **dadurch gekennzeichnet, dass** die externen Modifizierungsmittel aus der Gruppe ausgewählt sind, die aus mehrwertigen Alkoholen, Polyglykolen, Glycerin, Polyvinylalkohol, Phenoxyethanol, Phenylglykol, Sacchariden, Polymeren, Dimethylformamide besteht.

5. Wärmehärtbare Harzzusammensetzung nach einem der vorhergehenden Ansprüche, **dadurch gekennzeichnet, dass** sie interne Modifizierungsmittel in einer Menge von weniger als 7 %, vorzugsweise weniger als 5 %, noch bevorzugter weniger als 3 %, bezogen auf das Gewicht des Wärmehärtbaren Harzes, umfasst.

6. Wärmehärtbare Harzzusammensetzung nach einem der vorhergehenden Ansprüche, **dadurch gekennzeichnet, dass** sie interne Modifizierungsmittel in einer Menge umfasst, die größer als 2 % ist, vorzugsweise 3 % beträgt, beispielsweise größer als 5 % ist, bezogen auf das Gewicht des Wärmehärtbaren Harzes.

7. Wärmhärtbare Harzzusammensetzung nach einem der vorhergehenden Ansprüche, **dadurch gekennzeichnet, dass** sie interne Modifizierungsmittel umfasst, die aus der Gruppe ausgewählt sind, die aus Caprolactam, Guanaminen, Toluolsulfonamid, Dicyandiamid, Harnstoff besteht.

8. Paneel, das ein Substrat und eine obere Schicht umfasst, wobei die obere Schicht ein wärmehärtbares Harz umfasst, **dadurch gekennzeichnet, dass** das wärmehärtbare Harz die Zusammensetzung gemäß einem der vorhergehenden Ansprüche umfasst.

9. Paneel nach Anspruch 8, wobei die obere Schicht eine Dekorschicht besitzt, die ein erstes wärmehärtbares Harz umfasst, und eine Verschleißschicht, die ein zweites wärmehärtbares Harz umfasst, wobei das erste und das zweite wärmehärtbare Harz sich voneinander unterscheiden.

10. Paneel nach Anspruch 9, wobei nur ein Harz, das aus dem ersten und dem zweiten wärmehärtbaren Harz ausgewählt ist, ein Harz gemäß einem der Ansprüche 1 bis 7 darstellt.

11. Paneel nach Anspruch 10, wobei die obere Schicht eine Dekorschicht besitzt, die ein erstes wärmehärtbares Harz umfasst, und eine Verschleißschicht, die ein zweites wärmehärtbares Harz umfasst, wobei das erste und das zweite wärmehärtbare Harz sich voneinander unterscheiden.

## Revendications

1. Composition de résine thermodurcissable qui comprend une résine à base de mélamine et un ou plusieurs agents de modification, **caractérisé en ce que** la teneur totale desdits agents de modification est inférieure à 10 %, de préférence inférieure 7 %, de manière plus préférée inférieure à 5 %, de manière encore plus préférée inférieure à 3 % en poids de la résine thermodurcissable, **caractérisée en ce que** la résine à base de mélamine comprend un mélange d'au moins une résine de mélamine formaldéhyde et d'une résine de mélamine éthérifiée, et **en ce que** le rapport entre la résine de mélamine formaldéhyde et la résine de mélamine éthérifiée est compris entre 10:90 et 90:10, de préférence entre 30:70 et 70:30, par exemple s'élève à 50:50.

2. Composition de résine thermodurcissable selon la revendication 1, **caractérisée en ce qu'**elle comprend une quantité d'agents de modification externes qui est inférieure à 5 %, de manière plus préférée inférieure à 30 %, de manière encore plus préférée inférieure à 1 % en poids de la résine thermodurcissable.

3. Composition de résine thermodurcissable selon l'une quelconque des revendications précédentes, **caractérisée en ce qu'**elle est exempte d'agents de modification externes.

4. Composition de résine thermodurcissable selon l'une quelconque des revendications précédentes, **caractérisée en ce que** les agents de modification externes sont choisis parmi le groupe qui comprend : des alcools polyvalents, des polyglycols, du glycérol, de l'alcool polyvinylique, du phénoxyéthanol, du phényl glycol, des saccharides, des polymères, des diméthyl formamides.

5. Composition de résine thermodurcissable selon l'une quelconque des revendications précédentes, **caractérisée en ce qu'**elle comprend des agents de modification internes en une quantité inférieure 7 %, de préférence inférieure à 5 %, de manière encore plus préférée inférieure à 3 % en poids de la résine thermodurcissable.

6. Composition de résine thermodurcissable selon l'une quelconque des revendications précédentes, **caractérisée en ce qu'**elle comprend des agents de modification internes en une quantité supérieure à 2 %, de préférence qui s'élève à 3 %, par exemple qui est supérieure à 5 % en poids de la résine thermodurcissable.

7. Composition de résine thermodurcissable selon l'une quelconque des revendications précédentes, **caractérisée en ce qu'**elle comprend des agents de modification internes qui sont choisis parmi le groupe comprenant : du caprolactame, des guanamines, du toluènesulfonamide, du dicyandiamide, de l'urée.

8. Panneau qui comprend un substrat et une couche supérieure, dans lequel la couche supérieure comprend une résine thermodurcissable, **caractérisé en ce que** ladite résine thermodurcissable comprend la composition en conformité avec l'une quelconque des revendications précédentes.

9. Panneau selon la revendication 8, dans lequel ladite couche supérieure possède une couche décorative qui comprend une première résine thermodurcissable, et une couche d'usure qui comprend une deuxième résine thermodurcissable, dans lequel ladite première et ladite deuxième résine thermodurcissable diffèrent l'une de l'autre.

10. Panneau selon la revendication 9, dans lequel seulement une résine choisie parmi la première et la deuxième résine thermodurcissable représente une résine en conformité avec l'une quelconque des revendications 1 à 7.

11. Panneau selon la revendication 10, dans lequel ladite couche supérieure possède une couche décorative qui comprend une première résine thermodurcissable, et une couche d'usure qui comprend une deuxième résine thermodurcissable, dans lequel ladite première et ladite deuxième résine thermodurcissable diffèrent l'une de l'autre.
